# EUROPEAN PATENT SPECIFICATION

(11) **EP 3 146 689 B1**
(45) Date of publication and mention of the grant of the patent: **06.03.2019**
(21) Application number: 15808883.1
(22) Date of filing: 18.06.2015
(51) Int. Cl.: H04L 5/00

(54) **CSI FEEDBACK MODES AND INDICATION FOR SUB-CHANNEL FEEDBACK IN OFDMA SYSTEMS**
MODI UND INDIKATION DER RÜCKKOPPLUNG DER KANALSTATUSINFORMATION FÜR DIE SUBKANÄLE IN OFDMA-BASIERTEN KOMMUNIKATIONSSYSTEMEN
MODES DE RETOUR ET INDICATION DE DES INFORMATIONS DE TYPE CSI POUR LES SOUS-CANAUX DE TRANSMISSION DANS DES SYSTÈMES DE COMMUNICATION DE GENRE OFDMA

(30) Priority: 18.06.2014 US 201462013616 P
(43) Date of publication of application: 29.03.2017
(73) Proprietor: MediaTek Singapore Pte. Ltd., Singapore 138628 (SG)
(72) Inventor: WU, Tianyu, San Jose, California 95131 (US); LIU, Jianhan, San Jose, California 95131 (US); PARE JR., Thomas Edward, Mountain View, California 94040 (US)
(74) Representative: Hoefer & Partner Patentanwälte mbB
(86) International application number: PCT/SG2015/050168
(87) International publication number: WO 2015/195050

(56) References cited:
- EP-A2- 2 741 431
- US-A1- 2012 082 049
- US-A1- 2012 120 839
- US-A1- 2013 058 239
- US-A1- 2013 223 427
- US-B2- 8 532 581
- KO SOOMIN ET AL: "Efficient channel state feedback scheme for opportunistic scheduling in OFDMA systems by scheduling probability prediction", JOURNAL OF COMMUNICATIONS AND NETWORKS, vol. 15, no. 6, 1 December 2013 (2013-12-01), pages 589-600, XP011537201, NY, USA ISSN: 1229-2370, DOI: 10.1109/JCN.2013.000108 [retrieved on 2014-01-15]
- YONG LIU: 'D4.0 Sounding Comment Resolutions' IEEE P802.11 WIRELESS LANS 08 November 2012, pages 1 - 4, XP068040120

## Description

### CROSS REFERENCE TO RELATED APPLICATIONS

### TECHNICAL FIELD

The disclosed embodiments relate generally to wireless network communications, and, more particularly, to feedback process in wireless communications systems.

### BACKGROUND

In IEEE 802.11 wireless systems, channel sounding and feedback process is commonly used for channel estimation. In MIMO systems, each channel sounding and feedback process is followed by a series of MIMO frame exchange. During channel sounding and feedback, a transmitting device (initiator) sends a sounding announcement (e.g., null data packet announcement (NDPA)) followed by a sounding packet (e.g., null data packet (NDP)) to a receiving device (responder) participating in the process. The responder estimates the channel during the preamble portion of the sounding packet. The responder then feedbacks the average SNR (signal-to-noise ratio) and
CSI (channel state information) to allow the initiator to compute the transmit antenna (precoding) weights for MIMO transmission. Feedback packet may also include other channel quality metrics such as MCS, BER, SNR/SINR, and mutual information.

Feedback of accurate channel quality information such as SNR and MCS allows the transmitter to make correct decision regarding transmission bandwidth adjustment as well as MCS adaptation to improve system performance. In current implementation, channel quality information is provided based on a fixed sub-channel (e.g., the sounding bandwidth) and obtained through a sounding and feedback protocol. The channel conditions, however, could be significantly different in different sub-channels due to frequency selective fading. To have channel quality information for all sub-channels, multiple requests and feedbacks are required. This leads to increased system overhead and channel contention.

In orthogonal frequency division multiple access (OFDMA) systems, frequency division multiple access is achieved by assigning different OFDM sub-channels to different users. OFDMA design can benefit from multiuser diversity gain. CSI feedback for multiple users are required to achieve multiuser diversity gain. However, the existing CSI/SNR feedback scheme does not work. In IEEE 802.11ac, CSI feedback is only supported for the entire channel of a basic service set (BSS). The MCS feedback (MFB) for link adaptation will feedback one MCS for all data subcarriers and one SNR over all data subcarriers. If the sounding signal occupies 40MHz, then the SNR/MCS feedback is provided for 40MHz. The same SNR/MCS feedback is assumed valid for 20MHz sub-channel. Such approach is not sufficient for wireless systems where the transmission bandwidth can range from 160MHz to 20MHz. This is because the channel conditions could be significantly different in different sub-channels due to frequency selective fading. In OFDMA systems, a sub-channel bandwidth is around 2MHz. As a result, there will be 40 sub-channels for 80MHz WLAN wide channel and 80 sub-channels for 160MHz WLAN wide channel. The average SNR feedback in MFB is not enough for OFDMA systems because it cannot help transmitter to optimize the sub channel allocation for OFDMA systems. On the other hand, the compressed beamforming report will feedback average SNR, per subcarrier (group) SNR and beamforming matrix on the entire channel and have heavy feedback overhead. For 160MHz channel and 8-stream MU-MIMO case, the max VHT compressed beamforming report size will be over 200K bits. The compressed beamforming report for the entire channel may not be necessary for OFDMA systems.

A solution is sought to provide sub-channel SNR feedback and CSI reporting with reduced overhead, and to provide a mechanism for feedback mode indication in the sounding protocol for OFDMA systems.

US2013/0223427A1 discloses a method for providing channel feedback, wherein a feedback type can be requested that allows a selection between single user and multi user feedback type. EP2741431A2 and WO2014/195050A1 disclose further methods for providing channel feedback that allow a selection of a feedback type.

### SUMMARY

A method of indicating feedback mode and providing corresponding sub-channel feedback in OFDMA systems is provided by the methods according to claims 1 and 7. A corresponding wireless station is defined in claim 12. A transmitting device transmits a sounding announcement frame and a sounding signal to a receiving device in an OFDMA wireless system. The sounding signal is transmitted over multiple sub-channels of a wide channel. The transmitting device also provides a feedback mode indication. The receiving device estimates channel quality information based on the received sounding signal and the feedback mode indication. The receiving device then sends feedback information to the transmitting device. The feedback information contains the estimated channel quality information of a selected set of sub-channels based on the feedback mode indication.

In one embodiment, the feedback mode indication is contained in a station information (STA Info) field in the sounding announcement frame. In another embodiment, the feedback mode indication is contained in a polling frame. In one embodiment, the channel quality information comprises a sub-channel ID followed by an average signal to noise ratio (SNR) and a beamforming matrix of each selected sub-channel. In another embodiment, the selected set of sub-channels is predefined or based on a predefined channel quality threshold.

Other embodiments and advantages are described in the detailed description below. This summary does not purport to define the invention. The invention is defined by the appended claims and limited only by their scope. Embodiment(s) referred to in this description and not fully falling within the scope of said appended claims is (are) example(s) useful for understanding the present invention.

### BRIEF DESCRIPTION OF THE DRAWINGS

Figure 1 illustrates a channel sounding and feedback process with different channel state information feedback modes and indication in accordance with one novel aspect.
Figure 2 illustrates a wireless system with different channel state information feedback modes and indication in accordance with one novel aspect.
Figure 3 illustrates a novel feedback frame format in an IEEE 802.11ax wireless system.
Figures 4 illustrates link adaptation feedback with new feedback modes in an IEEE 802.11ax wireless system.
Figure 5 illustrates different feedback modes for sub-channel SNR and beamforming matrix feedback.
Figure 6 illustrates a first embodiment of feedback mode indication.
Figure 7 illustrates a second embodiment of feedback mode indication.
Figure 8 illustrates a third embodiment of feedback mode indication.
Figure 9 is a flow chart of a method of providing feedback mode indication by a transmitter in an OFDMA wireless communication system.
Figure 10 is a flow chart of a method of responding to feedback mode indication by a receiver in an OFDMA wireless communication system.

### DETAILED DESCRIPTION

Reference will now be made in detail to some embodiments of the invention, examples of which are illustrated in the accompanying drawings.

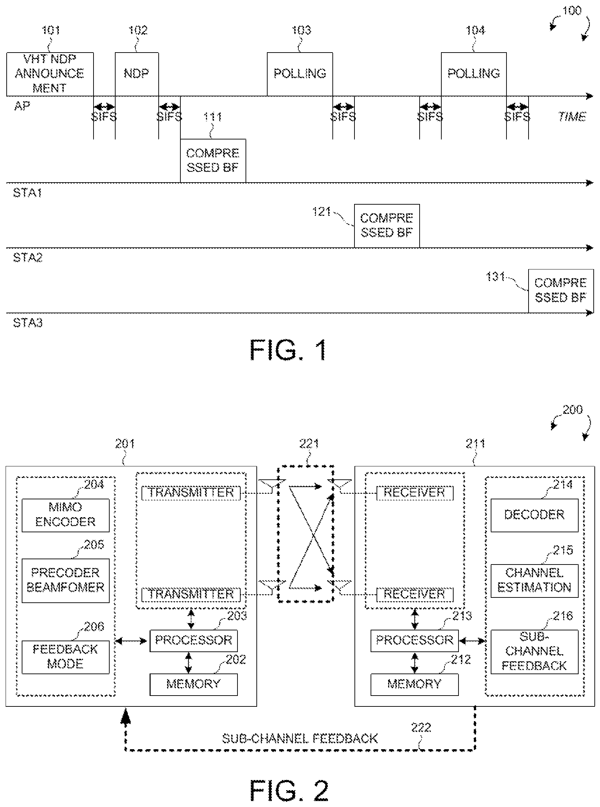

Figure 1 illustrates a channel sounding and feedback process with different channel state information feedback modes and indication in a wireless communication system 100 in accordance with one novel aspect. Wireless system 100 comprises a transmitting device (e.g., an access point AP) and a plurality of receiving devices (e.g., non-AP stations STA1, STA2, and STA3). To initiate a channel sounding procedure, the transmitting device AP first sends a VHT null data packet announcement (NDPA 101) followed by a sounding packet (e.g., null data packet (NDP) 102) to receiving devices STA1-STA3. NDPA 101 is transmitted first to inform the intended receiving device (e.g., via STA INFO fields) and NDP 102 is then transmitted for the intended receiving devices to estimate the channel. For example, in NDP 102, the L-STF, L-LTF, L-SIG fields are used for setting up the protection field against legacy devices. The signaling information for the NDP signal is carried in the VHT-SIG-A and the channel estimation is performed on the LTFs (long training fields). After channel sounding, transmitting device AP also sends downlink (DL) data packets to the STAs (not shown). Typically, the channel sounding is sent over a wide channel. In an OFDMA system, the DL data packets are sent to multiple users over different sub-channels. Note that a sub channel can be defined as a set of subcarriers. It can be a group of contiguous subcarriers or a set of non-contiguous subcarriers. The smallest sub channel is one single subcarrier. In one example, a group of data subcarriers (e.g., 26) is also referred to as a resource unit (RU) in the IEEE 802.11ax standard.

Channel sounding and feedback is a procedure to support transmit beamforming and fast link adaptation. Feedback on accurate channel quality information such as accurate SNR/MCS information allows the transmitter to make correct decision regarding the transmission bandwidth as well as MCS adaptation to improve system performance. Moreover, in OFDMA systems, CSI (channel state information) feedback from multiple users are required to achieve multiuser diversity gain.

In the current IEEE 802.11 implementation, the feedback information is provided based on the current channel bandwidth. For example, in IEEE 802.11ac, CSI feedback is only supported for the entire channel of a basic service set (BSS). The MCS feedback (MFB) for link adaptation will feedback one MCS for all data subcarriers and one SNR averaged over all data subcarriers. The average SNR feedback in MFB is not enough for OFDMA systems. On the other hand, the compressed beamforming report will feedback average SNR, per subcarrier (group) SNR and beamforming matrix on the entire channel and may have heavy feedback overhead. For 160MHz channel and 8-stream MU-MIMO case, the max VHT compressed beamforming report size will be over 200K bits. The compressed beamforming report for the entire channel may not be necessary for OFDMA systems.

When OFDMA is supported, one STA will only occupy a subset of data subcarriers or sub-channels. For MFB, feedback of average SNR over all data subcarriers cannot help transmitter to optimize the sub-channel allocation for OFDMA system. In one novel aspect, sub-channel SNR feedback is proposed to facilitate and to improve the performance in OFDMA systems. Similarly, for compressed beamforming report, the receiver only needs to feedback the SNR and beamforming matrix for good sub-channels. The receiver provides SNR and beamforming matrix feedback information for a subset of all the sub-channels based on a predefined condition. As a result, more feedback modes are introduced for OFDMA systems. Furthermore, a mechanism for feedback mode indication in the sounding protocol is provided. In the example of Figure 1, the AP provides feedback mode indication via sounding announcement NDPA 101 or polling frames 103 and 104, and STA1/STA2/STA3 will feedback the compressed beamforming report to the AP via frames 111, 121, and 131 with the indicated feedback mode, respectively.

Figure 2 illustrates a wireless system 200 with sub-channel SNR feedback in accordance with one novel aspect. Wireless system 200 comprises a transmitting device 201 and a receiving device 211 communicating with each other via a wireless SU-MIMO channel 221. Transmitting device 201 comprises memory 202, a processor 203, a MIMO encoder 204, a beamformer/precoder 205, a feedback mode indication module 206, and a plurality of transmitters coupled to a plurality of antennas, respectively. Receiving device 211 comprises memory 212, a processor 213, a decoder 214, a channel estimation module 215, a sub-channel feedback module 216, and a plurality of receivers coupled to a plurality of antennas, respectively. SU-MIMO channel 221 is formed by the plurality of transmitting antennas of transmitting station 201 and the plurality of receiving antennas of receiving station 211. Those skilled in the art would realize that "antenna" is used in a logical context, and may not necessarily be referred to as the physical antenna structure. SU-MIMO communication promises large gains for both channel capacity and reliability, essentially via the use of spatial-time codes and transmit beamforming (diversity gain oriented) combined with spatial stream multiplexed transmission (rate maximization oriented). Although SU-MIMO channel is illustrated in Figure 2, the present invention is not limited to SU-MIMO. In OFDMA systems, MU-MIMO over different sub-channels may also be supported.

The various function modules may be implemented and configured by software, firmware, hardware, and any combination thereof. The function modules, when executed by the processors (via program instructions contained in the memory), interwork with each other to allow the transmitting and receiving devices to perform certain embodiments of the present invention accordingly. For example, at the transmitter side, transmitting device 201 transmits a sounding signal to receiving device 211 and provides feedback mode indication. At the receiver side, receiving device 211 decode the sounding signal via decoder 214 and estimates the channel based on the received sounding signal via channel estimation module 215. The receiving device 211 then feedbacks the sub-channel SNR (signal-to-noise ratio) and CSI (channel state information) to the transmitting device 201 via a feedback channel 222. The feedback information comprises SNR/CSI information for a subset of all the sub-channels based on a predefined condition to reduce overhead. The actual feedback mode is indicated by the transmitting device 201 via feedback mode indication module 206.

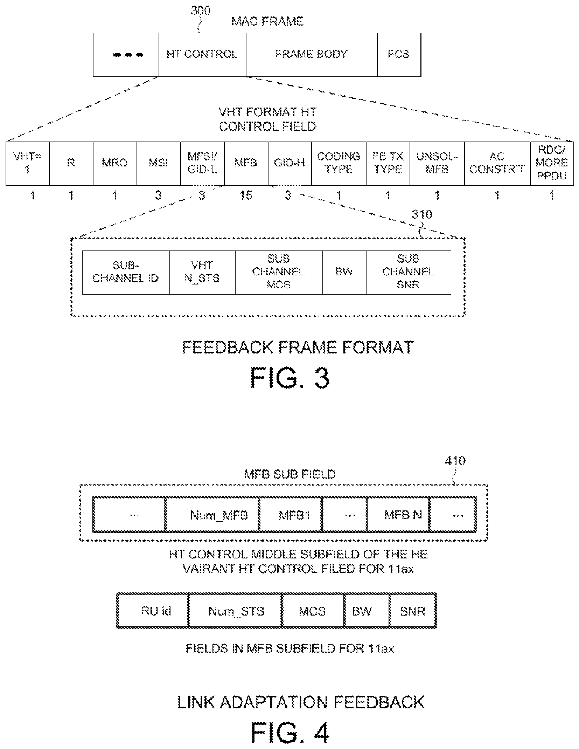

Figure 3 illustrates a novel feedback frame format in an IEEE 802.11ax wireless system. In the example of Figure 3, a MAC frame 300 contains a HT (high throughput) control field, which further contains an MCS request (MRQ) subfield, an MCS sequence identifier (MSI) subfield, an MFB sequence identifier/LSB of Group ID (MFSI/GID-L) subfield, a VHT N_STS, MCS, BW and SNR feedback (MFB) subfield, an MSB of Group ID (GID-H) subfield, coding type of MFB response (Coding Type) subfield, transmission type of MFB response (FB Tx Type) subfield, unsolicited MFB subfield, AC constraint subfield, and RDG/More PPDU subfield. The MFB subfield 310 further contains a number of spatial streams (N_STS) subfield, an MCS subfield, a bandwidth (BW) subfield, and an SNR subfield.

When MFB is requested, a traditional MFB subfield in 802.11ac contains the number of spatial streams, modulation and coding scheme (MCS), data transmission rate, bandwidth, and SNR information. In the example of Figure 3, the receiving device provides the MFB subfield feedback information for a subset of selected sub-channels of a 160MHz wide channel. For example, the MFB subfield 310 contains the sub-channel ID, number of the streams for each sub channel, MCS recommended for each sub channel, and average SNR information for each sub-channel. Different sub-channel feedback modes for MCC, SNR and beamforming matrix can be supported.

Figures 4 illustrates link adaptation feedback with new feedback modes in an IEEE 802.11ax wireless system. In the existing MCS feedback, only one MFB field in the VHT variant HT control field can only feedback one recommended MCS and one average SNR. The SNR is averaged over all data subcarriers and all spatial streams. To do the link adaptation for OFDMA systems, the link adaptation feedback should be able to feedback SNR and MCS for a set of sub channels. The new HT control middle subfield of the 11ax variant HT control field includes a sub channel list, the number of streams for each sub channel, the MCS recommended for each sub channel, and the average SNR for each sub channel. In the example of Figure 4, the MFB sub field 410 includes the number of MFB fields followed by each MFB field. Each MFB field includes a resource unit (RU) id followed by a traditional MFB subfield. The resource unit refers to a sub channel having a group of predetermined number of data sub carriers.

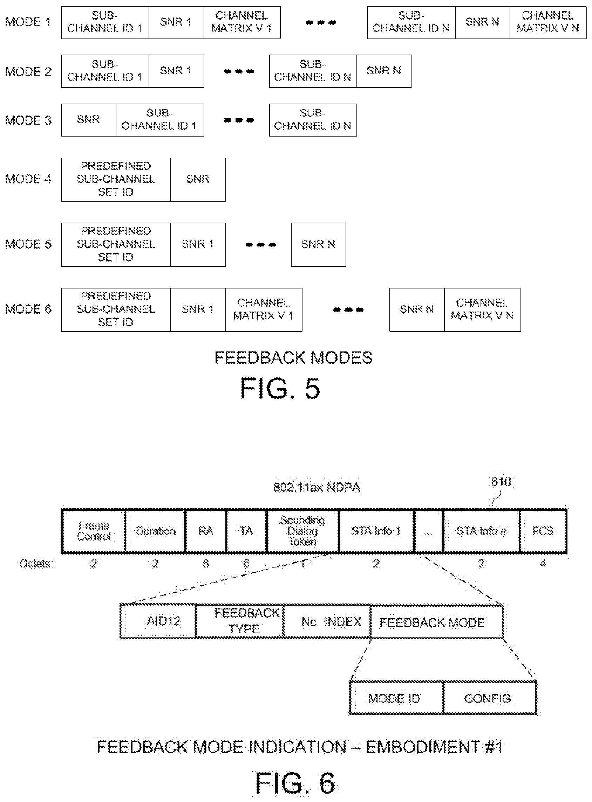

Figure 5 illustrates different feedback modes for sub-channel SNR and beamforming matrix feedback. In feedback mode #1, each STA feedback the sub-channel SNR and the beamforming matrix for a set of sub channels. The selection of the sub-channel set can be a set of sub channels indicated by the AP, a set of sub channels with highest SNR, or a set of sub channels with SNR higher than a predefined threshold. The feedback information includes a sub-channel id, the SNR for the sub channel or SNR for each spatial stream on the sub channel, and the beamforming matrix for each sub carrier on the sub channel or each group of sub carriers on the sub channel.

In feedback mode #2, each STA feedback the sub-channel SNR for a set of sub channels. The method of selecting the set of sub channels to feedback is the same as feedback mode #1. This mode #2 is suitable for OFDMA without beamforming. The feedback information includes a sub-channel id and the SNR for the sub channel for each selected sub channel.

In feedback mode #3, each STA feedback the average SNR or minimum SNR of a set of sub channels and feedback the sub-channel ID list in this set.

In feedback mode #4, each STA feedback the average SNR or minimum SNR for a predefined set of sub channels and the identification of the predefined sub-channel set. For example, when the predefined sub-channel set ID=1, the sub-channel set to feedback is all the odd sub channels. If one sub channel is defined as one sub carrier, the average SNR for all odd sub carriers will be fed back.

In feedback mode #5, each STA feedback the ID of a predefined sub-channel set and the SNR for each sub channel in the predefined sub-channel set.

In feedback mode #6, each STA feedback the ID of a predefined sub-channel set, the SNR and the beamforming matrix for each sub channel in the predefined sub-channel set. To support the various feedback modes, a feedback mode indication is needed. The feedback mode indication can be placed in NDP announcement frame or beamforming report poll frame.

Figure 6 illustrates a first embodiment of feedback mode indication. In the first embodiment, feedback mode is indicated via a new 802.11ax null data packet announcement (NDPA) frame 610. NDPA frame 610 comprises a frame control field, a duration field, an RA field, a TA field, a plurality of station information (STA Info) fields, and FCS. Each of the STA Info field further comprises a 12-bit AID, a feedback type element indicating SU/MU MIMO feedback, an Nc index for MU-MIMO, and a new feedback mode element. The feedback mode element is used to indicate a specific feedback mode for the corresponding STA to provide associated feedback information. The feedback mode element further comprises a feedback mode ID and an optional feedback configuration (CONFIG) field if necessary. For example, mode ID = 2 indicates feedback the SNR for the strongest N sub channels, and CONFIG field can provide the number N of sub channels to feedback or an SNR threshold. However, under the first embodiment, the NDPA frame has a new frame format for 802.11ax and does not support legacy STAs. The transmitting AP needs to perform the sounding and feedback mechanism separately for legacy STAs and 802.11ax STAs.

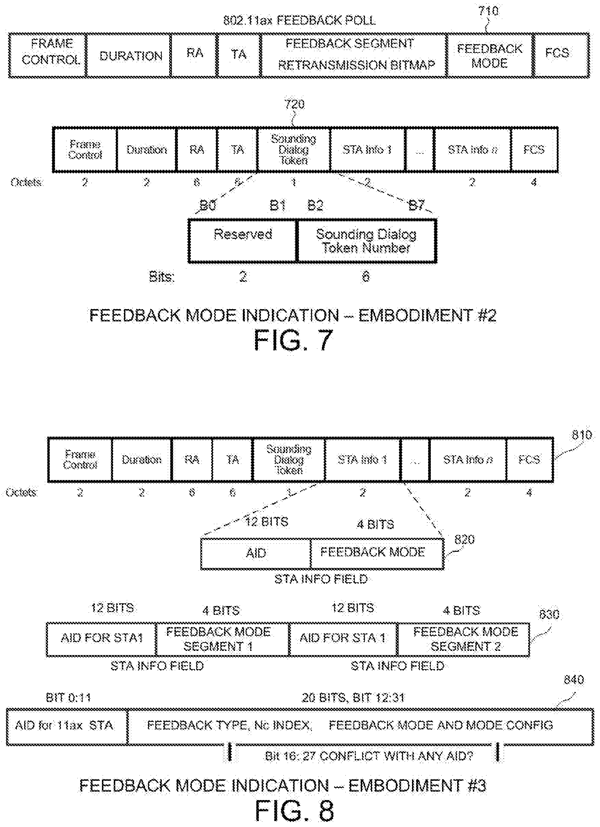

Figure 7 illustrates a second embodiment of feedback mode indication. In the second embodiment, feedback mode is indicated via a new 802.11ax feedback poll frame 710. Feedback poll frame 710 comprises a frame control field, a duration field, an RA field, a TA field, a feedback segment retransmission bitmap, a feedback mode field, and FCS. Similar to the first embodiment, the feedback mode field is used to indicate a specific feedback mode for the corresponding STA to provided associated feedback information. The feedback mode field further comprises a feedback mode ID and an optional feedback configuration (CONFIG) field if necessary. For example, mode ID = 2 indicates feedback the SNR for strongest N sub channels, and CONFIG field can provide the number N of sub channels to feedback or an SNR threshold.

In the existing sounding protocol, the beamforming poll will not be sent to the first feedback STA. Referring back to Figure 1, for example, the first STA1 provides compressed beamforming feedback 111 right after NDPA 101 and NDP 102. As a result, the first STA1 does not know which feedback mode to apply if the feedback mode indication is provided only in the subsequent polling frame 103 or polling frame 104. Therefore, while STA2 and STA3 are provided with feedback mode indication via the polling frames, another mechanism is needed for feedback mode indication for the first feedback STA1.

In one novel aspect, a reserved field in the sounding dialog token field can be used for such indication. As illustrated in Figure 7, NDPA frame 720 comprises a sounding dialog token, which further comprises a 2-bit reserved field and a 6-bit sounding dialog token number. If the first STA is a legacy STA or will feedback the compressed beamforming report as defined in 802.11ac, then the reserved bits will be set to 00. If the first STA needs to be indicated its feedback mode, then the reserved bits will be set to other value such as 01. When the reserved bits are set to 01, then the first feedback STA will wait for a feedback poll before it start to feedback. Alternatively, the reserved bits in the sounding dialog token can also be used to indicate two most widely used feedback modes. For example, bits "10" indicates feedback SNR for each subcarrier and bits "11" indicates feedback the SNR and beamforming matrix of a set of subcarriers with the highest SNR.

Figure 8 illustrates a third embodiment of feedback mode indication. In the third embodiment, feedback mode is indicated via an existing null data packet announcement (NDPA) frame 810 and keep backward compatibility. NDPA frame 810 comprises a frame control field, a duration field, an RA field, a TA field, a plurality of station information (STA Info) fields, and FCS. NDPA frame 810 can be modified to include the feedback mode indication without changing the frame format such that backward compatibility with 802.11ac is achieved. If the STA is a legacy STA, then the STA info field remains the same as defined in 802.11ac (e.g., AID, feedback type, and Nc Index). If the STA is an 802.11ax STA, then the STA Info field is revised to comprise a 12-bit AID and a 4-bit feedback mode indication, as depicted by STA Info field 820. For 802.11ax STAs, however, four bits may not be enough for feedback mode indication.

When the four-bit field is not enough for feedback mode indication, multiple STA fields can be combined together for feedback mode indication. As depicted by the STA info field 830, two STA info fields are combined together for feedback mode indication. For example, both AIDs of the two STA info fields are for the same STA1. Feedback segment 1 can be feedback type + Nc index, the same as defined in 802.11ac. Feedback segment 2 can be feedback mode. In addition, more STA info field can be combined and there can be a feedback segment 3 to indicate the feedback mode configuration. Because the feedback mode indication is provided in NDPA frame instead of in polling frame, an 802.11ax STA knows the feedback mode earlier and can perform corresponding channel estimation accordingly. For example, if the STA only needs to feedback SNR for a predefined subset of sub-channels, then the STA will compute SNR for those sub-channels. On the other hand, if the STA knows the feedback mode upon receiving the polling frame, then the STA needs to perform channel estimation on all sub-channels regardless of the actual feedback mode. However, combining more STA info fields wastes the redundant AID bits.

To avoid the waste of bits for duplicate AIDs, multiple 802.11ac STA info fields can be combined as an 802.11ax STA info field 840. In the example of STA info field 840, the 802.11ax STA info field had a total of 32 bits, double the size of an 802.11ac STA info field. Bits 0-11 are used for AID, bits 12-31 are all used for feedback indication, including feedback type, Nc Index, feedback mode ID, and feedback mode configuration. There is no duplicate AID in this format. However, if bits 16-27 happen to be the same as an AID in the BSS, then this format may have ambiguity. To solve this problem, a 1-bit format indication can be placed in the 802.11ax STA info field. If bits 16-27 conflict with an AID in the BSS, then set the format indication bit and use the format as depicted by STA info field 830.

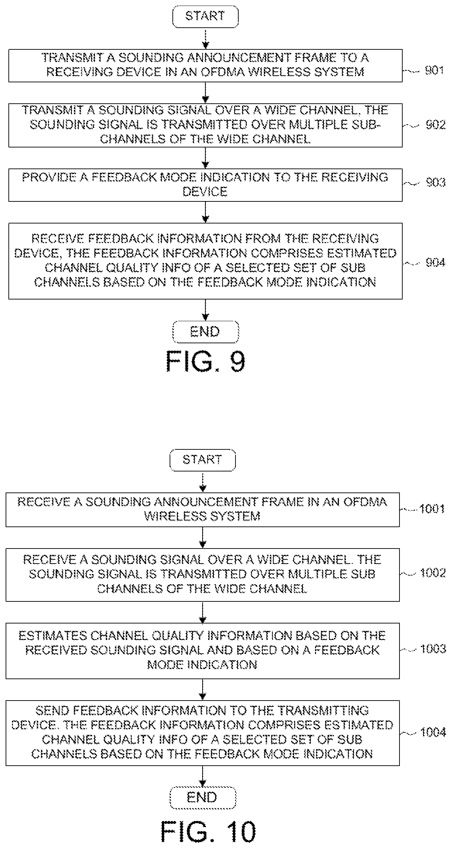

Figure 9 is a flow chart of a method of providing feedback mode indication by a transmitting device in an OFDMA wireless communication system. In step 901, a transmitting device transmits a sounding announcement frame to a receiving device in an OFDMA wireless system. In step 902, the transmitting device transmits a sounding signal over a wide channel. The sounding signal is transmitted over multiple sub-channels of the wide channel. In step 903, the transmitting device provides a feedback mode indication to the receiving device. In step 904, the transmitting device receives feedback information from the receiving device. The feedback information contains estimated channel quality information of a selected set of sub-channels based on the feedback mode indication. In one example, the feedback mode indication is contained in a station information (STA Info) field in the sounding announcement frame. In another example, the feedback mode indication is contained in a polling frame.

Figure 10 is a flow chart of a method of responding to feedback mode indication by a receiving device in an OFDMA wireless communication system. In step 1001, a receiving device receives a sounding announcement frame from a transmitting device in an OFDMA wireless system. In step 1002, the receiving device receives a sounding signal over a wide channel. The sounding signal is transmitted over multiple sub-channels of the wide channel. In step 1003, the receiving device estimates channel quality information based on the received sounding signal and based on a feedback mode indication provided by the transmitting device. In step 1004, the receiving device sends feedback information to the transmitting device. The feedback information contains estimated channel quality information of a selected set of sub-channels based on the feedback mode indication. In one example, the channel quality information comprises a sub-channel ID followed by an average signal to noise ratio (SNR) and a beamforming matrix of each selected sub-channel. In another example, the selected set of sub-channels is predefined or based on a predefined channel quality threshold.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method comprising:
a) transmitting a sounding announcement frame (610) by a transmitting device (201) to a receiving device (211) in an orthogonal frequency division multiple access, OFDMA, wireless system (200);
b) transmitting a sounding signal over a wide channel, wherein the sounding signal is transmitted over multiple sub-channels of the wide channel;
said method being **characterized by**:
c) providing a feedback mode indication and a feedback type indication to the receiving device (211), wherein the feedback mode indication comprises a feedback mode element to indicate a specific feedback mode from one or more feedback modes for the receiving device (211) to provide associated feedback information; and
d) receiving the associated feedback information from the receiving device (211), wherein the feedback information contains estimated channel quality information of a selected set of sub-channels based on the feedback mode indication,
wherein the one or more feedback mode comprises one or more or all of the following feedback modes:
- a feedback mode in which a sub-channel signal-to-noise ratio, SNR, and a beamforming matrix for a set of sub-channels is the associated feedback information;
- a feedback mode in which a sub-channel SNR for a set of sub-channels is the associated feedback information;
- a feedback mode in which an average SNR or minimum SNR for a set of sub-channels is the associated feedback information;
- a feedback mode in which an average SNR or minimum SNR for a predefined set of sub-channels and an identification of the predefined set of sub-channels is the associated feedback information,
- a feedback mode in which an identification of a predefined sub-channel set and the SNR for each sub-channel in the predefined sub-channel set is the associated feedback information, and
- a feedback mode in which an identification of a predefined sub-channel set, the SNR and the beamforming matrix for each sub-channel in the predefined sub-channel set is the associated feedback information.

2. The method of Claim 1, wherein the feedback mode indication is contained in a station information, also referred to as STA Info, field in the sounding announcement frame (610).

3. The method of Claim 2, wherein multiple IEEE 802.11ac STA Info fields are combined together for the feedback mode indication, or the multiple IEEE 802.11ac STA Info fields are combined together to form a new IEEE 802.11ax STA info field.

4. The method of Claim 1, wherein the feedback mode indication is contained in a polling frame (103, 104) and wherein a reserved field of a sounding dialog token in the sounding announcement frame (610) contains the feedback mode indication.

5. The method of Claim 1, wherein the channel quality information comprises a sub-channel identification, ID, followed by an average SNR and a beamforming matrix of each selected sub-channel.

6. The method of Claim 1, wherein the selected set of sub-channels is either predefined or is based on a predefined channel quality threshold.

7. A method comprising:
a) receiving a sounding announcement frame (610) transmitted from a transmitting device (201) by a receiving device (211) in an orthogonal frequency division multiple access, OFDMA, wireless system (200);
b) receiving a sounding signal over a wide channel by the receiving device (211), wherein the sounding signal is transmitted over multiple sub-channels of the wide channel;
said method being **characterized by**:
c) receiving a feedback mode indication and a feedback type indication transmitted from the transmitting device (201), wherein the feedback mode indication comprises a feedback mode element to indicate a specific feedback mode from one or more feedback modes for the receiving device (211) to provide associated feedback information, and estimating channel quality information based on the received sounding signal and based on the feedback mode indication provided by the transmitting device (201); and
d) sending the associated feedback information to the transmitting device (201), wherein the feedback information contains the estimated channel quality information of the selected set of sub-channels based on the feedback mode indication
wherein the one or more feedback modes comprise one or more or all of the following feedback modes:
- a feedback mode in which a sub-channel signal-to-noise ratio, SNR, and a beamforming matrix for a set of sub-channels is the associated feedback information;
- a feedback mode in which a sub-channel SNR for a set of sub-channels is the associated feedback information;
- a feedback mode in which an average SNR or minimum SNR for a set of sub-channels is the associated feedback information;
- a feedback mode in which an average SNR or minimum SNR for a predefined set of sub-channels and an identification of the predefined set of sub-channels is the associated feedback information,
- a feedback mode in which an identification of a predefined sub-channel set and the SNR for each sub-channel in the predefined sub-channel set is the associated feedback information, and
- a feedback mode in which an identification of a predefined sub-channel set, the SNR and the beamforming matrix for each sub-channel in the predefined sub-channel set is the associated feedback information.

8. The method of Claim 7, wherein the feedback mode indication is contained in a station information, also referred to as STA Info, field in the sounding announcement frame (610), or the feedback mode indication is contained in a polling frame (103, 104).

9. The method of Claim 7, wherein the channel quality information comprises a sub-channel identification, ID, followed by an average SNR and a beamforming matrix of each selected sub-channel.

10. The method of Claim 7, wherein the selected set of sub-channels is either predefined or is based on a predefined channel quality threshold.

11. The method of Claim 7, wherein the receiving device also feedbacks recommended modulation and coding scheme, also referred to as MCS, information for each of the selected sub-channels.

12. A wireless station (211) comprising:
a receiver that receives a sounding announcement frame (610), a feedback mode indication and a feedback type indication transmitted from a transmitting device (201) in an orthogonal frequency division multiple access, OFDMA, wireless system (200), wherein the feedback mode indication comprises a feedback mode element to indicate a specific feedback mode from one or more feedback modes for the wireless station (211) to provide associated feedback information, wherein the receiver also receives a sounding signal over a wide channel, and wherein the sounding signal is transmitted over multiple sub-channels of the wide channel;
a channel estimation module (215) that estimates channel quality information based on the received sounding signal and based on a feedback mode indication provided by the transmitting device (201); and
a feedback module (216) that sends the associated feedback information to the transmitting device (201), wherein the feedback information contains the estimated channel quality information of a selected set of sub-channels based on the feedback mode indication,
wherein the one or more feedback modes comprise one or more or all of the following feedback modes:
- a feedback mode in which a sub-channel signal-to-noise ratio, SNR, and a beamforming matrix for a set of sub-channels is the associated feedback information;
- a feedback mode in which a sub-channel SNR for a set of sub-channels is the associated feedback information;
- a feedback mode in which an average SNR or minimum SNR for a set of sub-channels is the associated feedback information;
- a feedback mode in which an average SNR or minimum SNR for a predefined set of sub-channels and an identification of the predefined set of sub-channels is the associated feedback information,
- a feedback mode in which an identification of a predefined sub-channel set and the SNR for each sub-channel in the predefined sub-channel set is the associated feedback information, and
- a feedback mode in which an identification of a predefined sub-channel set, the SNR and the beamforming matrix for each sub-channel in the predefined sub-channel set is the associated feedback information.

13. The wireless station of Claim 12, wherein the feedback mode indication is contained in a station information, also referred to as STA Info, field in the sounding announcement frame (610), or the feedback mode indication is contained in a polling frame (103, 104).

14. The wireless station of Claim 12, wherein the channel quality information comprises a sub-channel identification, ID, followed by an average SNR and a beamforming matrix of each selected sub-channel.

15. The wireless station of Claim 12, wherein the selected set of sub-channels is either predefined or is based on a predefined channel quality threshold.

16. The wireless station of Claim 12, wherein the receiving device also feedbacks recommended modulation and coding scheme, also referred to as MCS, information for each of the selected sub-channels.

## Patentansprüche

1. Verfahren aufweisend:
a) Senden eines Sondierungsankündigungsrahmens (610) durch eine Sendevorrichtung (201) an eine Empfangsvorrichtung (211) in einem Orthogonal-Frequenzmultiplex-Mehrfachzugriff, OFDMA, -Funksystem (200);
b) Senden eines Sondierungssignals über einen breiten Kanal, wobei das Sondierungssignal über mehrere Sub-Kanäle des breiten Kanals gesendet wird;
wobei das Verfahren **gekennzeichnet ist durch**:
c) Bereitstellen einer Rückmeldungsmodusindikation und einer Rückmeldungstypindikation an die Empfangsvorrichtung (211), wobei die Rückmeldungsmodusindikation ein Rückmeldungsmoduselement aufweist, um einen spezifischen Rückmeldungsmodus aus einem oder mehreren Rückmeldungsmodi für die Empfangsvorrichtung (211) anzuzeigen, um zugehörige Rückmeldungsinformationen bereitzustellen; und
d) Empfangen der zugehörigen Rückmeldungsinformationen von der Empfangsvorrichtung (211), wobei die Rückmeldungsinformationen berechnete Kanalqualitätsinformationen einer ausgewählten Gruppe von Sub-Kanälen basierend auf der Rückmeldungsmodusindikation aufweisen,
wobei der eine oder die mehreren Rückmeldungsmodi einen oder mehrere oder alle der nachfolgenden Rückmeldungsmodi umfassen:
- einen Rückmeldungsmodus, in welchem ein Sub-Kanal-Signal-zu-Störsignal-Verhältnis, -SNR, und eine Strahlformungsmatrix für eine Gruppe von Sub-Kanälen die zugehörigen Rückmeldungsinformationen sind;
- einen Rückmeldungsmodus, in welchem ein Sub-Kanal-SNR für eine Gruppe von Sub-Kanälen die zugehörigen Rückmeldungsinformationen sind;
- einen Rückmeldungsmodus, in welchem ein durchschnittliches SNR oder ein minimales SNR für eine Gruppe von Sub-Kanälen die zugehörigen Rückmeldungsinformationen sind;
- einen Rückmeldungsmodus, in welchem ein durchschnittliches SNR oder ein minimales SNR für eine vordefinierte Gruppe von Sub-Kanälen und eine Identifikation der vordefinierten Gruppe von Sub-Kanälen die zugehörigen Rückmeldungsinformationen sind;
- einen Rückmeldungsmodus, in welchem eine Identifikation einer vordefinierten Sub-Kanal-Gruppe und das SNR für jeden Sub-Kanal in der vordefinierten Sub-Kanal-Gruppe die zugehörigen Rückmeldungsinformationen sind; und
- einen Rückmeldungsmodus, in welchem eine Identifikation einer vordefinierten Sub-Kanal-Gruppe, das SNR und die Strahlformungsmatrix für jeden Sub-Kanal in der vordefinierten Sub-Kanal-Gruppe die zugehörigen Rückmeldungsinformationen sind.

2. Verfahren gemäß Anspruch 1, wobei die Rückmeldungsmodusindikation in einem Stationsinformation, auch als STA-Info bezeichnet, -Feld in dem Sondierungsankündigungsrahmen (610) enthalten ist.

3. Verfahren gemäß Anspruch 2, wobei mehrere IEEE-802.11ac-STA-Info-Felder für die Rückmeldungsmodusindikation zusammengefasst sind, oder die mehreren IEEE-802.11ac-STA-Info-Felder zusammengefasst sind, um ein neues IEEE-802.11ax-STA-Info-Feld zu bilden.

4. Verfahren gemäß Anspruch 1, wobei die Rückmeldungsmodusindikation in einem Abfragerahmen (103, 104) enthalten ist, und wobei ein reserviertes Feld eines Sondierungsdialog-Tokens in dem Sondierungsankündigungsrahmen (610) die Rückmeldungsmodusindikation enthält.

5. Verfahren gemäß Anspruch 1, wobei die Kanalqualitätsinformationen eine Sub-Kanal-Identifikation, -ID, gefolgt von einem durchschnittlichen SNR und einer Strahlformungsmatrix jedes ausgewählten Sub-Kanals aufweisen.

6. Verfahren gemäß Anspruch 1, wobei die ausgewählte Gruppe von Sub-Kanälen entweder vordefiniert ist oder auf einem vordefinierten Kanalqualitätsschwellenwert basiert.

7. Verfahren aufweisend:
a) Empfangen eines Sondierungsankündigungsrahmens (610), der von einer Sendevorrichtung (201) gesendet wird, durch eine Empfangsvorrichtung (211) in einem Orthogonal-Frequenzmultiplex-Mehrfachzugriff, OFDMA, -Funksystem (200);
b) Empfangen eines Sondierungssignals über einen breiten Kanal durch die Empfangsvorrichtung (211), wobei das Sondierungssignal über mehrere Sub-Kanäle des breiten Kanals gesendet wird;
wobei das Verfahren **gekennzeichnet ist durch**:
c) Empfangen einer Rückmeldungsmodusindikation und einer Rückmeldungstypindikation, die von der Sendevorrichtung (201) gesendet werden, wobei die Rückmeldungsmodusindikation ein Rückmeldungsmoduselement aufweist, um einen spezifischen Rückmeldungsmodus aus einem oder mehreren Rückmeldungsmodi für die Empfangsvorrichtung (211) anzuzeigen, um zugehörige Rückmeldungsinformationen bereitzustellen, und Berechnen von Kanalqualitätsinformationen basierend auf dem empfangenen Sondierungssignal und basierend auf der Rückmeldungsmodusindikation, die durch die Sendevorrichtung (201) bereitgestellt wird; und
d) Senden der zugehörigen Rückmeldungsinformationen an die Sendevorrichtung (201), wobei die Rückmeldungsinformationen die berechneten Kanalqualitätsinformationen der ausgewählten Gruppe von Sub-Kanälen basierend auf der Rückmeldungsmodusindikation enthalten,
wobei der eine oder die mehreren Rückmeldungsmodi einen oder mehrere oder alle der nachfolgenden Rückmeldungsmodi umfassen:
- einen Rückmeldungsmodus, in welchem ein Sub-Kanal-Signal-zu-Störsignal-Verhältnis, -SNR, und eine Strahlformungsmatrix für eine Gruppe von Sub-Kanälen die zugehörigen Rückmeldungsinformationen sind;
- einen Rückmeldungsmodus, in welchem ein Sub-Kanal-SNR für eine Gruppe von Sub-Kanälen die zugehörigen Rückmeldungsinformationen sind;
- einen Rückmeldungsmodus, in welchem ein durchschnittliches SNR oder ein minimales SNR für eine Gruppe von Sub-Kanälen die zugehörigen Rückmeldungsinformationen sind;
- einen Rückmeldungsmodus, in welchem ein durchschnittliches SNR oder ein minimales SNR für eine vordefinierte Gruppe von Sub-Kanälen und eine Identifikation der vordefinierten Gruppe von Sub-Kanälen die zugehörigen Rückmeldungsinformationen sind;
- einen Rückmeldungsmodus, in welchem eine Identifikation einer vordefinierten Sub-Kanal-Gruppe und das SNR für jeden Sub-Kanal in der vordefinierten Sub-Kanal-Gruppe die zugehörigen Rückmeldungsinformationen sind; und
- einen Rückmeldungsmodus, in welchem eine Identifikation einer vordefinierten Sub-Kanal-Gruppe, das SNR und die Strahlformungsmatrix für jeden Sub-Kanal in der vordefinierten Sub-Kanal-Gruppe die zugehörigen Rückmeldungsinformationen sind.

8. Verfahren gemäß Anspruch 7, wobei die Rückmeldungsmodusindikation in einem Stationsinformation, auch als STA-Info bezeichnet, -Feld in dem Sondierungsankündigungsrahmen (610) enthalten ist, oder die Rückmeldungsmodusindikation in einem Abfragerahmen (103, 104) enthalten ist.

9. Verfahren gemäß Anspruch 7, wobei die Kanalqualitätsinformationen eine Sub-Kanal-Identifikation, -ID, gefolgt von einem durchschnittlichen SNR und einer Strahlformungsmatrix jedes ausgewählten Sub-Kanals aufweisen.

10. Verfahren gemäß Anspruch 7, wobei die ausgewählte Gruppe von Sub-Kanälen entweder vordefiniert ist oder auf einem vordefinierten Kanalqualitätsschwellenwert basiert.

11. Verfahren gemäß Anspruch 7, wobei die Empfangsvorrichtung auch empfohlene Modulations-und-Codierungs-Schema, auch als MCS bezeichnet, -Informationen für jeden der ausgewählten Sub-Kanäle zurückmeldet.

12. Funkstation (211), aufweisend:
einen Empfänger, welcher einen Sondierungsankündigungsrahmen (610), eine Rückmeldungsmodusindikation und eine Rückmeldungstypindikation empfängt, die von einer Sendevorrichtung (201) in einem Orthogonal-Frequenzmultiplex-Mehrfachzugriff, OFDMA, -Funksystem (200) gesendet werden, wobei die Rückmeldungsmodusindikation ein Rückmeldungsmoduselement aufweist, um einen spezifischen Rückmeldungsmodus aus einem oder mehreren Rückmeldungsmodi für die Funkstation (211) anzuzeigen, um zugehörige Rückmeldungsinformationen bereitzustellen, wobei der Empfänger außerdem ein Sondierungssignal über einen breiten Kanal empfängt, und wobei das Sondierungssignal über mehrere Sub-Kanäle des breiten Kanals gesendet wird;
ein Kanalberechnungsmodul (215), welches Kanalqualitätsinformationen basierend auf dem empfangenen Sondierungssignal und basierend auf einer Rückmeldungsmodusindikation berechnet, die durch die Sendevorrichtung (201) bereitgestellt wird; und
ein Rückmeldungsmodul (216), welches die zugehörigen Rückmeldungsinformationen an die Sendevorrichtung (201) sendet, wobei die Rückmeldungsinformationen die berechneten Kanalqualitätsinformationen einer ausgewählten Gruppe von Sub-Kanälen basierend auf der Rückmeldungsmodusindikation enthalten,
wobei der eine oder die mehreren Rückmeldungsmodi einen oder mehrere oder alle der nachfolgenden Rückmeldungsmodi umfassen:
- einen Rückmeldungsmodus, in welchem ein Sub-Kanal-Signal-zu-Störsignal-Verhältnis, -SNR, und eine Strahlformungsmatrix für eine Gruppe von Sub-Kanälen die zugehörigen Rückmeldungsinformationen sind;
- einen Rückmeldungsmodus, in welchem ein Sub-Kanal-SNR für eine Gruppe von Sub-Kanälen die zugehörigen Rückmeldungsinformationen sind;
- einen Rückmeldungsmodus, in welchem ein durchschnittliches SNR oder ein minimales SNR für eine Gruppe von Sub-Kanälen die zugehörigen Rückmeldungsinformationen sind;
- einen Rückmeldungsmodus, in welchem ein durchschnittliches SNR oder ein minimales SNR für eine vordefinierte Gruppe von Sub-Kanälen und eine Identifikation der vordefinierten Gruppe von Sub-Kanälen die zugehörigen Rückmeldungsinformationen sind;
- einen Rückmeldungsmodus, in welchem eine Identifikation einer vordefinierten Sub-Kanal-Gruppe und das SNR für jeden Sub-Kanal in der vordefinierten Sub-Kanal-Gruppe die zugehörigen Rückmeldungsinformationen sind; und
- einen Rückmeldungsmodus, in welchem eine Identifikation einer vordefinierten Sub-Kanal-Gruppe, das SNR und die Strahlformungsmatrix für jeden Sub-Kanal in der vordefinierten Sub-Kanal-Gruppe die zugehörigen Rückmeldungsinformationen sind.

13. Funkstation gemäß Anspruch 12, wobei die Rückmeldungsmodusindikation in einem Stationsinformation, auch als STA-Info bezeichnet, -Feld in dem Sondierungsankündigungsrahmen (610) enthalten ist, oder die Rückmeldungsmodusindikation in einem Abfragerahmen (103, 104) enthalten ist.

14. Funkstation gemäß Anspruch 12, wobei die Kanalqualitätsinformationen eine Sub-Kanal-Identifikation, -ID, gefolgt von einem durchschnittlichen SNR und einer Strahlformungsmatrix jedes ausgewählten Sub-Kanals aufweisen.

15. Funkstation gemäß Anspruch 12, wobei die ausgewählte Gruppe von Sub-Kanälen entweder vordefiniert ist oder auf einem vordefinierten Kanalqualitätsschwellenwert basiert.

16. Funkstation gemäß Anspruch 12, wobei die Empfangsvorrichtung auch empfohlene Modulations-und-Codierungs-Schema, auch als MCS bezeichnet, -Informationen für jeden der ausgewählten Sub-Kanäle zurückmeldet.

## Revendications

1. Procédé comprenant le fait :
a) de transmettre une trame d'annonce de sondage (610) par un dispositif de transmission (201) à un dispositif de réception (211) dans un système sans fil, (200), d'accès multiple par répartition orthogonale de la fréquence, OFDMA ;
b) de transmettre un signal de sondage sur un canal large, où le signal de sondage est transmis sur de multiples sous-canaux du canal large ;
ledit procédé étant **caractérisé par** le fait :
c) de fournir une indication de mode de rétroaction et une indication de type de rétroaction au dispositif de réception (211), où l'indication de mode de rétroaction comprend un élément de mode de rétroaction pour indiquer un mode de rétroaction spécifique parmi un ou plusieurs modes de rétroaction pour le dispositif de réception (211) pour fournir une information de rétroaction associée ; et
d) de recevoir l'information de rétroaction associée depuis le dispositif de réception (211), où l'information de rétroaction contient une information de qualité de canal estimée d'un ensemble sélectionné de sous-canaux en se basant sur l'indication de mode de rétroaction,
dans lequel le ou les plusieurs modes de rétroaction comprennent un ou plusieurs ou tous les modes de rétroaction suivants :
- un mode de rétroaction où un rapport signal sur bruit, SNR, de sous-canal et une matrice de formation de faisceau pour un ensemble de sous-canaux représentent l'information de rétroaction associée ;
- un mode de rétroaction où un SNR de sous-canal pour un ensemble de sous-canaux représente l'information de rétroaction associée ;
- un mode de rétroaction où un SNR moyen ou un SNR minimal pour un ensemble de sous-canaux représente l'information de rétroaction associée ;
- un mode de rétroaction où un SNR moyen ou un SNR minimal pour un ensemble prédéfini de sous-canaux et une identification de l'ensemble prédéfini de sous-canaux représentent l'information de rétroaction associée,
- un mode de rétroaction où une identification d'un ensemble prédéfini de sous-canaux et le SNR pour chaque sous-canal dans l'ensemble prédéfini de sous-canaux représentent l'information de rétroaction associée, et
- un mode de rétroaction où une identification d'un ensemble prédéfini de sous-canaux, le SNR et la matrice de formation de faisceau pour chaque sous-canal dans l'ensemble prédéfini de sous-canaux représentent l'information de rétroaction associée.

2. Procédé de la revendication 1, dans lequel l'indication de mode de rétroaction est contenue dans un champ d'informations de station, également appelées STA Info, dans la trame d'annonce de sondage (610).

3. Procédé de la revendication 2, dans lequel de multiples champs STA Info IEEE 802.11ac sont combinés ensemble pour l'indication de mode de rétroaction, ou les multiples champs STA Info IEEE 802.11ac sont combinés ensemble pour former un nouveau champ STA Info IEEE 802.11ax.

4. Procédé de la revendication 1, dans lequel l'indication de mode de rétroaction est contenue dans une trame d'appel (103, 104) et dans lequel un champ réservé d'un jeton de dialogue de sondage dans la trame d'annonce de sondage (610) contient l'indication de mode de rétroaction.

5. Procédé de la revendication 1, dans lequel les informations de qualité de canal comprennent une identification de sous-canal, ID, suivie d'un SNR moyen et d'une matrice de formation de faisceau de chaque sous-canal sélectionné.

6. Procédé de la revendication 1, dans lequel l'ensemble sélectionné de sous-canaux est soit prédéfini, soit basé sur un seuil prédéfini de qualité de canal.

7. Procédé comprenant le fait :
a) de recevoir une trame d'annonce de sondage (610) transmise depuis un dispositif de transmission (201) par un dispositif de réception (211) dans un système sans fil (200) d'accès multiple par répartition orthogonale de la fréquence, OFDMA ;
b) de recevoir un signal de sondage sur un canal large par le dispositif de réception (211), où le signal de sondage est transmis sur de multiples sous-canaux du canal large ;
ledit procédé étant **caractérisé par** le fait :
c) de recevoir une indication de mode de rétroaction et une indication de type de rétroaction transmises depuis le dispositif de transmission (201), où l'indication de mode de rétroaction comprend un élément de mode de rétroaction pour indiquer un mode de rétroaction spécifique parmi un ou plusieurs modes de rétroaction pour le dispositif de réception (211) pour fournir une information de rétroaction associée, et d'estimer une information de qualité de canal en se basant sur le signal de sondage reçu et en se basant sur l'indication de mode de rétroaction fournie par le dispositif de transmission (201) ; et
d) d'envoyer une information de rétroaction associée au dispositif de transmission (201), où l'information de rétroaction contient une information de qualité de canal estimée de l'ensemble sélectionné de sous-canaux en se basant sur l'indication de mode de rétroaction,
dans lequel le ou les plusieurs modes de rétroaction comprennent un ou plusieurs ou tous les modes de rétroaction suivants :
- un mode de rétroaction où un rapport signal sur bruit, SNR, de sous-canal, et une matrice de formation de faisceau pour un ensemble de sous-canaux représentent l'information de rétroaction associée ;
- un mode de rétroaction où un SNR de sous-canal pour un ensemble de sous-canaux représente l'information de rétroaction associée ;
- un mode de rétroaction où un SNR moyen ou un SNR minimal pour un ensemble de sous-canaux représente l'information de rétroaction associée ;
- un mode de rétroaction où un SNR moyen ou un SNR minimal pour un ensemble prédéfini de sous-canaux et une identification de l'ensemble prédéfini de sous-canaux représentent l'information de rétroaction associée,
- un mode de rétroaction où une identification d'un ensemble prédéfini de sous-canaux et le SNR pour chaque sous-canal dans l'ensemble prédéfini de sous-canaux représentent l'information de rétroaction associée, et
- un mode de rétroaction où une identification d'un ensemble prédéfini de sous-canaux, le SNR et la matrice de formation de faisceau pour chaque sous-canal dans l'ensemble prédéfini de sous-canaux représentent l'information de rétroaction associée.

8. Procédé de la revendication 7, dans lequel l'indication de mode de rétroaction est contenue dans un champ d'informations de station, également appelées STA Info, dans la trame d'annonce de sondage (610), ou l'indication de mode de rétroaction est contenue dans une trame d'appel (103, 104).

9. Procédé de la revendication 7, dans lequel l'information de qualité de canal comprend une identification de sous-canal, ID, suivie d'un SNR moyen et d'une matrice de formation de faisceau de chaque sous-canal sélectionné.

10. Procédé de la revendication 7, dans lequel l'ensemble sélectionné de sous-canaux est soit prédéfini, soit basé sur un seuil prédéfini de qualité de canal.

11. Procédé de la revendication 7, dans lequel le dispositif de réception assure également une rétroaction d'informations de schéma de modulation et de codage recommandé, également appelé MCS, pour chacun des sous-canaux sélectionnés.

12. Station sans fil (211) comprenant :
un récepteur qui reçoit une trame d'annonce de sondage (610), une indication de mode de rétroaction et une indication de type de rétroaction transmises à partir d'un dispositif de transmission (201) dans un système sans fil (200) d'accès multiple par répartition orthogonale de la fréquence, OFDMA, où l'indication de mode de rétroaction comprend un élément de mode de rétroaction pour indiquer un mode de rétroaction spécifique parmi un ou plusieurs modes de rétroaction pour la station sans fil (211) pour fournir une information de rétroaction associée, où le récepteur reçoit également un signal de sondage sur un canal large, et où le signal de sondage est transmis sur de multiples sous-canaux du canal large ;
un module d'estimation de canal (215) qui estime une information de qualité de canal en se basant sur le signal de sondage reçu et en se basant sur une indication de mode de rétroaction fournie par le dispositif de transmission (201) ; et
un module de rétroaction (216) qui envoie une information de rétroaction associée au dispositif de transmission (201), où l'information de rétroaction contient l'information de qualité de canal estimée d'un ensemble sélectionné de sous-canaux en se basant sur l'indication de mode de rétroaction,
dans laquelle le ou les plusieurs modes de rétroaction comprennent un ou plusieurs ou tous les modes de rétroaction suivants :
- un mode de rétroaction où un rapport signal sur bruit, SNR, de sous-canal et une matrice de formation de faisceau pour un ensemble de sous-canaux représentent l'information de rétroaction associée ;
- un mode de rétroaction où un SNR de sous-canal pour un ensemble de sous-canaux représente l'information de rétroaction associée ;
- un mode de rétroaction où un SNR moyen ou un SNR minimal pour un ensemble de sous-canaux représente l'information de rétroaction associée ;
- un mode de rétroaction où un SNR moyen ou un SNR minimal pour un ensemble prédéfini de sous-canaux et une identification de l'ensemble prédéfini de sous-canaux représentent l'information de rétroaction associée,
- un mode de rétroaction où une identification d'un ensemble prédéfini de sous-canaux et le SNR pour chaque sous-canal dans l'ensemble prédéfini de sous-canaux représentent l'information de rétroaction associée, et
- un mode de rétroaction où une identification d'un ensemble prédéfini de sous-canaux, le SNR et la matrice de formation de faisceau pour chaque sous-canal dans l'ensemble prédéfini de sous-canaux représentent l'information de rétroaction associée.

13. Station sans fil de la revendication 12, dans laquelle l'indication de mode de rétroaction est contenue dans un champ d'informations de station, également appelées STA Info, dans la trame d'annonce de sondage (610), ou l'indication de mode de rétroaction est contenue dans une trame d'appel (103, 104).

14. Station sans fil de la revendication 12, dans laquelle les informations de qualité de canal comprennent une identification de sous-canal, ID, suivie d'un SNR moyen et d'une matrice de formation de faisceau de chaque sous-canal sélectionné.

15. Station sans fil de la revendication 12, dans laquelle l'ensemble sélectionné de sous-canaux est soit prédéfini soit basé sur un seuil prédéfini de qualité de canal.

16. Station sans fil de la revendication 12, dans laquelle le dispositif de réception assure également une rétroaction d'informations de schéma de modulation et de codage recommandé, également appelé MCS pour chacun des sous-canaux sélectionnés.
